**Europäisches Patentamt**

**European Patent Office**

**Office européen des brevets**

(19)

(11) Numéro de publication : **0 296 931 B1**

(12)

# FASCICULE DE BREVET EUROPEEN

(45) Date de publication du fascicule du brevet :
**17.07.91 Bulletin 91/29**

(51) Int. Cl.⁵ : **A01D 17/10, B07B 1/20**

(21) Numéro de dépôt : **88401438.2**

(22) Date de dépôt : **10.06.88**

(54) Décrotteur pour produits délicats, du genre racines, tubercules, bulbes.

(30) Priorité : **19.06.87 FR 8708762**

(43) Date de publication de la demande :
**28.12.88 Bulletin 88/52**

(45) Mention de la délivrance du brevet :
**17.07.91 Bulletin 91/29**

(84) Etats contractants désignés :
**AT BE CH DE ES FR GB GR IT LI LU NL SE**

(56) Documents cités :
**DE-A- 3 601 280**
**GB-A- 2 015 380**
**GB-A- 2 105 963**
**GB-A- 2 158 738**

(73) Titulaire : **Simon, Gaston Charles**
**Le Moulin de Claire Fontaine**
**F-44450 La Chapelle Basse Mer (FR)**

(72) Inventeur : **Simon, Gaston Charles**
**Le Moulin de Claire Fontaine**
**F-44450 La Chapelle Basse Mer (FR)**

(74) Mandataire : **Phélip, Bruno et al**
**c/o Cabinet Harlé & Phélip 21, rue de La**
**Rochefoucauld**
**F-75009 Paris (FR)**

Jouve, 18, rue Saint-Denis, 75001 PARIS

# Description

La présente invention concerne un décrotteur pour produits du genre tubercules, racines, ou bulbes.

Un tel décrotteur peut se situer par exemple, sur une machine de récolte, entre le dispositif principal d'arrachage des produits et la trémie de réception et/ou de stockage des produits nettoyés.

Les produits sont, d'une manière connue, acheminés entre le dispositif d'arrachage et la trémie de stockage, au moyen d'un tapis transporteur du type à barreaux, lequel tapis, grâce à un système d'agitation de son brin supérieur, réalise en même temps la fonction de décrotteur. Cette agitation consiste à faire sauter les produits et déchets sur le tapis ; elle est obtenue au moyen de galets excentrés disposés sous le brin supérieur du tapis et entrainés par le tapis lui-même, ou par d'autres moyens.

Il est apparu que ce genre de traitement des produits ne présentait pas une efficacité suffisante dans le domaine de la séparation (produits, déchets, particules terreuses), et que, surtout, pour des produits délicats, ceux-ci ressortaient meurtris du traitement ; leur aspect et leur durée de conservation s'en trouvant dégradés.

Il est également connu, comme décrit dans le brevet GB-A-2 158 738 qui comporte les caractéristiques du préambule de la revendication 1, d'effectuer une opération de tamisage des produits entre le dispositif d'arrachage et la zone de réception des produits triés. Dans ce document, les produits récoltés sont transportés sur un tapis convoyeur sans fin dont la partie amont est soumise à un mouvement de va et vient. Cette partie animée d'un mouvement de va et vient se situe juste derrière le dispositif d'arrachage des produits, entre le rouleau amont et un rouleau autour duquel s'enroule le tapis.

Un tel dispositif engendre un mouvement de va et vient du rouleau au niveau de l'entrée du tapis c'est-à-dire que l'espace entre ledit rouleau et le dispositif d'arrachage est variable, ce qui peut provoquer une chute intempestive des produits et/ou une accumulation de produits et déchets dans l'espace en question. Un tel dispositif engendre également des réactions sur tout le brin inférieur du tapis notamment.

La présente invention a pour but de palier ces inconvénients. Elle permet de faire avancer les produits d'une façon continue entre le poste d'arrachage et le poste d'évacuation et de réaliser une séparation particulièrement efficace entre produits et particules terreuses et autres déchets, sans blesser le produit en question.

L'invention se caractérise par les éléments de la partie caractérisante de la revendication 1.

Le décrotteur selon l'invention est constitué d'un tapis perforé, du type à barreaux, à mouvement uniforme d'avancement, animé d'un mouvement de tamisage sensiblement parallèle au sens de défilement des produits ; la portion de tapis animée du mouvement de tamisage, est comprise entre deux portions oscillantes du tapis, délimitées à l'une de leurs extrémités, par des guides fixes en forme de pivots et, à l'autre extrémité, par les guides mobiles de ladite portion de tamisage.

Selon un premier mode de réalisation de l'invention, le décrotteur comporte deux portions oscillantes: une portion amont orientée vers le haut, au-dessus du plan de tamisage, une portion aval orientée vers le bas, sous le plan de tamisage, les deux portions évoluant autour des pivots sensiblement dans un dièdre.

Toujours selon l'invention, il comporte d'une part, en amont, une portion de tapis à défilement continu, qui s'étend entre le pivot de la portion oscillante amont adjacente et un guide en forme de rouleau ou galet, placé au niveau du poste d'arrachage des produits, et, d'autre part, en aval, une portion de tapis à défilement continu, qui s'étend entre le pivot de la portion oscillante aval adjacente et un guide d'extrémité en forme de rouleau ou galet, placé au niveau du poste d'évacuation des produits, lesdites portions amont et aval étant de préférence sensiblement parallèles à la portion de tamisage.

Selon un second mode de réalisation de l'invention, le décrotteur comporte deux portions de tapis, oscillantes, orientées vers le bas, sous le plan de tamisage, chacune des portions évoluant autour des pivots, sensiblement dans un dièdre.

Toujours selon ce second mode de réalisation de l'invention, le décrotteur comporte, en aval, une portion de tapis qui s'étend entre le pivot de la portion oscillante adjacente et un guide d'extrémité en forme de rouleau ou galet, placé au niveau du poste d'évacuation ; laquelle portion de tapis aval étant, de préférence, sensiblement parallèle à la portion de tamisage.

Selon une disposition préférentielle de l'invention, les guides de la portion de tapis de tamisage sont contenus dans l'espace séparant les plans qui sont perpendiculaires au plan de tamisage, et qui passent par les axes des guides en forme de pivots fixes.

Toujours selon l'invention, le décrotteur comporte un cadre rigide sur lequel sont fixés les guides de la portion de tapis de tamisage, ce cadre est mû par un système bielle-manivelle. Ce système bielle-manivelle comporte des moyens de réglage de l'amplitude et de la fréquence du mouvement de tamisage de façon à adapter le tamisage à la vitesse d'avancement du tapis et à la nature des produits à nettoyer.

Toujours selon l'invention, le cadre rigide de tamisage, comporte des moyens de suspension le reliant au bâti de la machine, et qui sont constitués de bras oscillants sensiblement perpendiculaires, dans leur position médiane, au plan du tapis de tamisage.

L'invention concerne également la machine d'arrachage de produits comportant un décrotteur tel que défini précédemment.

L'invention sera encore illustrée, sans être aucunement limitée, par la description suivante et les dessins annexés dans lesquels :

_ la figure 1 représente, de façon schématique, un décrotteur selon l'invention,

_ la figure 2 est une vue partielle selon 2-2 de la figure 1,

_ la figure 3 représente, de façon schématique, selon un premier mode de réalisation, le décrotteur installé dans une machine d'arrachage,

_ la figure 4 représente, de façon schématique, un second mode de réalisation du décrotteur implanté dans une machine d'arrachage.

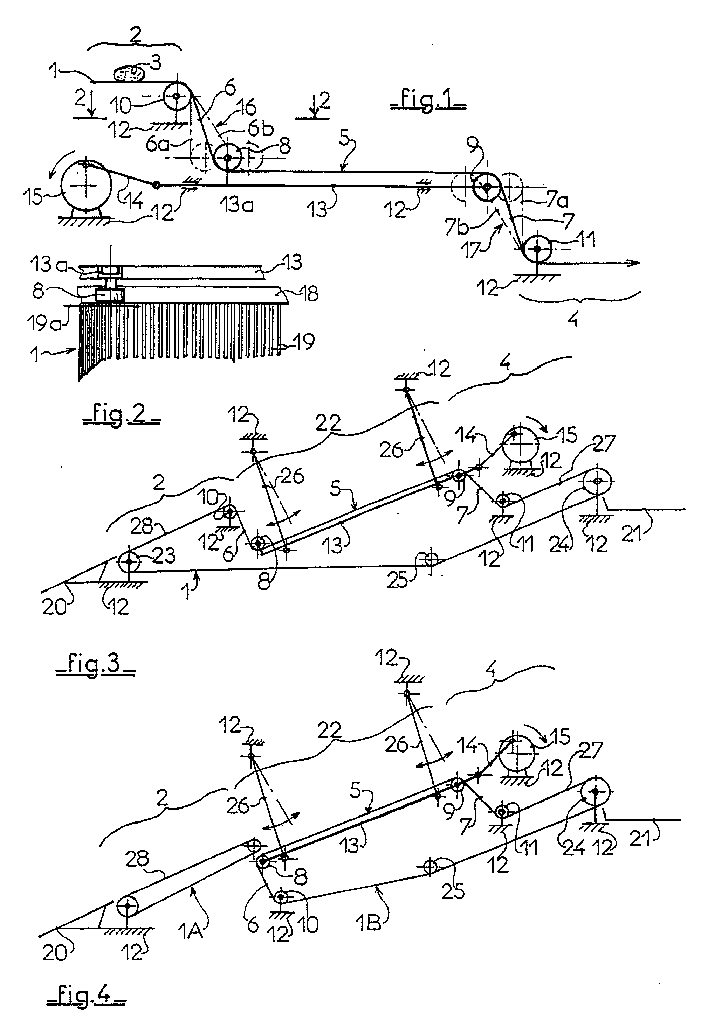

On a représenté, figure 1, un décrotteur selon l'invention, implanté sur un tapis transporteur 1, entre la zone d'arrivée 2 des produits 3 et la zone d'évacuation 4 de ces mêmes produits.

Le décrotteur comporte une portion de tapis de tamisage 5 et deux portions de tapis 6 et 7, oscillantes, disposées respectivement en amont et en aval dudit tapis de tamisage 5. La portion de tamisage 5 s'étend entre deux guides 8 et 9 disposés respectivement en amont et en aval. La portion oscillante amont 6 s'étend entre le guide 8 et un guide 10 servant de pivot. La portion oscillante aval 7 s'étend entre le guide 9 et un guide 11 servant lui aussi de pivot. Les pivots 10 et 11 sont en forme de galets ou de rouleaux articulés sur des axes solidaires du bâti 12 du décrotteur et de la machine d'arrachage. Les guides 8 et 9 de la portion de tamisage 5 sont, selon le cas, des rouleaux ou des galets solidaires d'un dispositif mobile 13 animé d'un mouvement de va et vient sous l'effet d'un système bielle-manivelle 14, 15 monté sur le bâti 12. Ce dispositif 13 se présente sous la forme d'un cadre et il est guidé en translation sur le bâti 12 de la machine. On remarque, figure 1, que le guide 9 est fixé à l'une des extrémités du cadre 13 ; le guide 8 est fixé sur ledit cadre par l'intermédiaire d'un support vertical 13a. Le guide 9 est situé sous le plan de tamisage ; le guide 8 est situé au-dessus de ce plan de tamisage.

Le cadre 13 est représenté figure 1, dans une position médiane ; les portions oscillantes 6 et 7 se situent entre leurs positions extrêmes 6a, 6b et 7a, 7b. Ces positions extrêmes forment sensiblement des dièdres 16 et 17 qui partent des pivots 10 et 11 et s'ouvrent sur les guides 8 et 9 respectivement.

On remarque, sur cette figure 1, que les côtés 6a et 7a des dièdres 16 et 17 respectivement sont à l'extérieur et sensiblement perpendiculaires au plan du tapis de tamisage 5. Les côtés 6b et 7b des dièdres 16 et 17 respectivement, sont internes et sensiblement parallèles entre eux. De cette façon, le tapis 1 ne s'enroule que de façon limitée tant sur les pivots 10, 11 que sur les guides 8 et 9 ; l'angle entre deux portions adjacentes de tapis est toujours au moins égal à 90° ; cette disposition permet d'augmenter la durée de vie du tapis 1. On remarque encore, que les pivots 10 et 11 ont un entraxe plus important que les guides 8 et 9 du tapis de tamisage 5. En fait, les guides 8 et 9 sont en permanence, de préférence, contenus dans l'espace séparant les plans qui, d'une part, passent par les axes des guides 10 et 11 et, d'autre part, sont perpendiculaires au plan de tamisage.

Les portions oscillantes 6 et 7 ont sensiblement la même longueur, en position médiane, et la portion de tamisage 5 est disposée de façon à être sensiblement parallèle au cadre 13 et en particulier à son plan d'évolution.

Dans l'exemple de réalisation de la figure 1, la portion oscillante 6 est orientée vers le haut, c'est-à-dire au-dessus du plan de tamisage. Le guide 8 est constitué de deux galets solidaires du cadre 13 ; ils roulent sur la bordure du tapis transporteur 1, figure 2. Ce tapis transporteur 1 est constitué de courroies latérales 18 sur lesquelles sont rapportés des barreaux transversaux 19. Les produits 3 sont normalement étalés sur les barreaux 19 ; des rails 19a peuvent être prévus entre les galets 8 pour canaliser lesdits produits. De la même façon, le pivot 11 est constitué de deux galets qui roulent sur les courroies latérales 18 du tapis.

Selon la vitesse du tapis transporteur 1 et la nature des produits 2 à nettoyer, il peut être nécessaire d'adapter le tamisage ; pour cela on peut prévoir de faire varier l'amplitude et la fréquence du va et vient du cadre 13 qui supporte les guides 8 et 9 de la portion de tamisage 5 dudit tapis 1. On peut remarquer que la vitesse de rotation, ou le nombre de tours par minute, est constante pour les guides 10 et 11.

La figure 3 représente un mode de réalisation particulier d'un décrotteur selon l'invention, intégré à une machine d'arrachage de racines et/ou de tubercules et/ou de bulbes.

Cette machine, représentée de façon schématique, comporte, à sa partie avant, un dispositif d'arrachage 20 des produits à nettoyer, positionné en amont du tapis transporteur sans fin 1, et elle comporte, à l'arrière, représentée de façon schématique, une trémie de stockage 21, ou autre, des produits nettoyés, située en aval du dit tapis transporteur 1.

Le brin supérieur du tapis transporteur 1 se divise en plusieurs zones :

– une zone d'arrivée 2 des produits, placée directement en arrière du dispositif d'arrachage 20 ;

– une zone de tamisage 22 où se situe le décrotteur ;

– une zone d'évacuation 4, placée en amont de la trémie de stockage 21.

Le tapis transporteur 1 est un tapis unique, sans fin ; il est guidé, tout à fait en amont, derrière le dispositif d'arrachage 20, sur un rouleau 23 solidaire du bâti 12 de la machine. A son extrémité arrière, le tapis transporteur 1 est guidé par un rouleau 24, moteur par exemple, positionné au-dessus de la trémie de stockage 21 et, lui aussi, solidaire du bâti 12 de la machine. La vitesse de ce rouleau moteur 24 peut être modulée selon les besoins.

Le brin inférieur du tapis 1 peut comporter un dispositif de tension 25 à ressort par exemple, qui agit en permanence.

La portion 28 du tapis 1, dans la zone d'arrivée 2, s'étend du rouleau d'entrée 23 jusqu'au pivot 10 qui détermine l'entrée du décrotteur. La portion 27 du tapis 1, dans la zone d'extrémité 4, s'étend du pivot 11 qui détermine la fin du décrotteur jusqu'au rouleau d'extrémité moteur 24. Les portions de tapis 27 et 28 ont une vitesse constante.

Entre ces deux zones 2 et 4 se situe la zone de tamisage 22 qui est isolée du reste du tapis entre les pivots 10 et 11 ; elle comporte, dans le sens d'avancement du produit à nettoyer, la portion oscillante 6, puis la portion de tamisage 5, puis enfin la portion oscillante 7.

Ces trois portions se situent entre les pivots 10 et 11 et sont délimitées par les guides 8 et 9 mobiles, solidaires du cadre 13.

Le cadre 13 est solidaire du châssis 12 de la machine au moyen de bras oscillants 26 qui sont, dans leur position médiane, de préférence perpendiculaires et situés au-dessus du plan du tapis de tamisage 5. Ce cadre 13 est soumis à l'action d'un système bielle-manivelle 14-15 monté sur le bâti 12.

La figure 4 présente un second mode de réalisation dans lequel le tapis transporteur est constitué de deux parties : un premier tapis 1A dans la zone d'arrivée 2 des produits et un tapis unique 1B pour la partie décrotteur et la zone d'évacuation 4. Le tapis 1A déverse les produits à l'entrée du tapis 5, il peut comporter sa propre motorisation. Le tapis 1B est entraîné par le rouleau moteur 24 comme précédemment.

La partie décrotteur, ou zone de tamisage 22, est isolée du reste du tapis par les pivots fixes 10 et 11 ; elle comprend, comme précédemment, une portion de tamisage 5, sensiblement parallèle au tapis d'arrivée 1A. Cette portion de tamisage 5 est délimitée par les guides 8 et 9 montés sur le cadre mobile 13. Ce cadre mobile 13 est suspendu au bâti 12 au moyen des biellettes 26 disposées, en position médiane, de façon sensiblement perpendiculaire au plan du tapis de tamisage 5.

Les portions oscillantes 6 et 7 sont, toutes deux orientées vers le bas, c'est-à-dire sous le plan de tamisage. La portion oscillante 6 est délimitée par le guide 8 en forme de rouleau ou galet, et le pivot 10 qui est solidaire du bâti 12 de la machine. La portion oscillante 7 est délimitée par le guide 9 en forme de rouleau ou galet également, et par le pivot 11 constitué, comme dans le cas précédent, figure 3, de galets disposés latéralement sur la bande 18 du tapis ; lesquels galets sont solidaires du bâti 12.

Les produits provenant du poste d'arrachage 20, sont acheminés à vitesse constante, par le tapis transporteur 1A de la zone d'arrivée, sur le tapis de tamisage 5 ; puis ils rejoignent la zone d'évacuation 4, sur le brin 27 du tapis 1B qui avance à vitesse constante, d'où ils sont déposés dans la trémie de stockage 21.

Dans ce second mode de réalisation, les portions oscillantes 6 et 7 ont également la même longueur en position médiane ; elles évoluent comme précédemment, dans des dièdres dont les côtés externes sont sensiblement perpendiculaires au plan du tapis de tamisage 5 et dont les côtés internes sont concourants en un point situé au-dessus dudit tapis.

L'entraxe entre les pivots 10 et 11 est au moins égal, de préférence supérieur, à l'entraxe entre les guides 8 et 9 solidaires du cadre 13. Cette particularité permet notamment, de ne pas imposer au tapis 1B une courbure trop importante autour des guides 8 et 9 ; là aussi l'angle entre deux portions adjacentes du tapis est égal ou supérieur à 90°.

Selon la nature et l'état des produits à nettoyer, il peut être nécessaire d'adapter le mouvement du décrotteur tant en amplitude qu'en fréquence, comme il a été vu précédemment. A titre d'exemple, pour des pommes de terre primeurs, l'amplitude du mouvement du cadre 13 est de 35 mm et la fréquence est de 8Hz.

Un tel dispositif décrotteur permet aussi de répartir les produits en une couche homogène bien étalée sur la surface du tapis 5. De ce fait, un tel dispositif peut être placé dans une chaîne de conditionnement avec cette double fonction de nettoyage et d'étalement.

Les signes de référence insérés après les caractéristiques techniques mentionnées dans les revendications ont pour seul but de faciliter la compréhension de ces dernières, et n'en limitent aucunement la portée.

## Revendications

1. Décrotteur de produits délicats, du genre racines, tubercules, bulbes, entre le poste d'arrachage (20) et le poste de stockage ou d'évacuation (21), du type constitué d'un tapis transporteur (1) perforé, à mouvement uniforme d'avancement, animé d'un mouvement de tamisage sensiblement parallèle au sens de défilement des produits, caractérisé en ce que la portion de tapis (5) animée du mouvement de tamisage, est comprise entre deux portions oscillantes (6 et 7) du tapis, délimitées à l'une de leurs extrémités, par des guides fixes (10, 11), en forme de pivots, et à l'autre extrémité, par les guides mobiles (8 et 9) de ladite portion de tamisage (5).

2. Décrotteur selon la revendication 1, caractérisé en ce qu'il comporte deux portions oscillantes (6 et 7) : une portion amont (6) orientée vers le haut, au-dessus du plan de tamisage, une portion aval (7) orientée vers le bas, sous le plan de tamisage ; les deux portions (6 et 7) évoluant autour des pivots (10, 11) sensiblement dans un dièdre.

3. Décrotteur selon la revendication 2, caractérisé en ce qu'il comporte d'une part, en amont, une portion (28) du tapis (1) à défilement continu, qui s'étend entre le pivot (10) de la portion oscillante amont adjacente (6) et un guide (23) en forme de rouleau ou galet, placé au niveau du poste d'arrachage (20) des produits et, d'autre part, en aval, une portion (27) du tapis (1) qui s'étend entre le pivot (11) de la portion oscillante aval adjacente (7) et un guide d'extrémité (24) en forme de rouleau ou galet, placé au niveau du poste d'évacuation (21) des produits.

4. Décrotteur selon la revendication 1, caractérisé en ce qu'il comporte deux portions de tapis oscillantes (6 et 7), orientées vers la bas, c'est-à-dire sous le plan de tamisage, chacune desdites portions (6 et 7) évoluant autour des pivots (10 et 11), sensiblement dans un dièdre.

5. Décrotteur selon la revendication 4, caractérisé en ce qu'il comporte, en aval, une portion de tapis (27), qui s'étend entre le pivot (11) de la portion oscillante adjacente (7) et un guide d'extrémité (24), en forme de rouleau ou galet, placé au niveau du poste d'évacuation (21), lequel guide (24) est un rouleau moteur.

6. Décrotteur selon l'une quelconque des revendications 1 à 5, caractérisé en ce qu'il comporte des guides (8 et 9) de la portion de tapis de tamisage (5), contenus dans l'espace séparant les plans perpendiculaires au plan de tamisage et qui passent par les axes des guides (10 et 11).

7. Décrotteur selon l'une quelconque des revendications 1 à 6, caractérisé en ce qu'il comporte un cadre rigide (13) sur lequel sont fixés les guides (8 et 9) de la portion de tapis de tamisage (5), lequel cadre est mobile en translation, guidé par rapport au bâti (12) du décrotteur et mû par un système bielle-manivelle (14, 15) fixé sur ledit bâti (12).

8. Décrotteur selon la revendication 7, caractérisé en ce le système bielle-manivelle (14, 15) comporte des moyens de réglage de l'amplitude et de la fréquence du mouvement du cadre (13), de façon à adapter le tamisage à la vitesse d'avancement du tapis transporteur (1) et à la nature des produits à nettoyer.

9. Décrotteur selon la revendication 7, caractérisé en ce que le cadre rigide de tamisage (13), comporte des moyens de suspension le reliant au bâti (12) du décrotteur, et qui sont constitués de bras oscillants (26) sensiblement perpendiculaires, dans leur position médiane, au plan du tapis de tamisage (5).

10. Machine d'arrachage de produits délicats du genre, racines, tubercules, bulbes, caractérisée en ce qu'elle comporte un décrotteur selon l'une quelconque des revendications 1 à 9.

**Patentansprüche**

1. Vorrichtung zum Abtrennen von Schmutz von empfindlichen Produkten wie z.B. Wurzeln, Knollen oder Zwiebeln zwischen der Erntestation (20) und der Lager- oder Abgabestation (21) von der Art, die von einem perforierten Förderband (1) gebildet wird, das sich gleichförmig vorwärts bewegt und zu einer Siebbewegung angeregt wird, die im wesentlichen parallel zur Vorwärtsbewegung der Produkte ist, dadurch **gekennzeichnet**, daß sich der zur Siebbewegung angeregte Teil (5) des Förderbandes zwischen zwei oszillierenden Teilen (6 und 7) des Bandes befindet, die an einem ihrer Enden von festen Führungen (10, 11) in Form von Schwenkachsen und an ihrem anderen Ende von beweglichen Führungen (8 und 9) des Siebteils (5) begrenzt werden.

2. Vorrichtung nach Anspruch 1, dadurch **gekennzeichnet**, daß sie zwei oszillierende Teile (6 und 7) umfaßt, von denen ein stromaufwärtiger Teil (6) nach oben über die Siebebene orientiert ist und ein stromabwärtiger Teil (7) nach unten unter die Siebebene orientiert ist, und wobei die beiden Teile (6 und 7) um die Schwenkachsen (10, 11) im wesentlichen in einem Flächenwinkel schwenken.

3. Vorrichtung nach Anspruch 2, dadurch **gekennzeichnet**, daß sie einerseits stromaufwärts einen Teil (28) des Förderbandes (1) mit kontinuierlicher Vorwärtsbewegung umfaßt, der sich zwischen der Schwenkachse (10) des benachbarten stromaufwärtigen oszillierenden Teils (6) und einer Führung (23) in Form einer Rolle oder Walze erstreckt, die in Höhe der Erntestation (20) der Produkte angeordnet ist, und andererseits stromabwärts einen Teil (27) des Förderbandes (1), der sich zwischen der Schwenkachse (11) des benachbarten stromabwärtigen oszillierenden Teils (7) und einer Endführung (24) in Form einer Rolle oder Walze erstreckt, die in Höhe der Abgabestation (21) für die Produkte angeordnet ist.

4. Vorrichtung nach Anspruch 1, dadurch **gekennzeichnet**, daß sie zwei oszillierende Teile (6 und 7) des Förderbandes umfaßt, die nach unten, d.h unter die Siebebene orientiert sind, wobei jeder dieser Teile (6 und 7) um Schwenkachsen (10 und 11) im wesentlichen in einem Flächenwinkel schwenkt.

5. Vorrichtung nach Anspruch 4, dadurch **gekennzeichnet**, daß sie stromab einen Teil (27) des Förderbandes umfaßt, der sich zwischen der Schwenkachse (11) des benachbarten oszillierenden Teils (7) und einer Endführung (24) in Form einer Walze oder Rolle erstreckt, die in Höhe der Abgabestation (21) angeordnet ist, wobei es sich bei dieser Führung (24) um eine Motorwalze handelt.

6. Vorrichtung nach einem der Ansprüche 1 bis 5, dadurch **gekennzeichnet**, daß sie Führungen (8 und 9) für den Siebteil (5) des Förderbandes umfaßt, die in dem Zwischenraum enthalten sind, der die zur Siebebene senkrechten Ebenen trennt, und die über die Führungsachsen (10 und 11) führen.

7. Vorrichtung nach einem der Ansprüche 1 bis 6, dadurch **gekennzeichnet**, daß sie einen starren Rahmen (13) umfaßt, auf dem die Führungen (8 und 9) des Siebteils (5) des Förderbandes montiert sind, wobei dieser Rahmen translatorisch beweglich, bezüglich des Gestells (12) der Vorrichtung geführt und von einem Pleuel-Kurbel-System (14, 15) angetrieben ist, das am Gestell (12) befestigt ist.

8. Vorrichtung nach Anspruch 7, dadurch **gekennzeichnet**, daß das Pleuel-Kurbel-System (14, 15) Vorrichtungen zum Regulieren der Amplitude und der Frequenz der Bewegung des Rahmens (13) in der Weise umfaßt, daß das Sieben an die Geschwindigkeit der Vorwärtsbewegung des Transportbandes (1) und an die Beschaffenheit der zu reinigenden Produkte anpaßbar ist.

9. Vorrichtung nach Anspruch 7, dadurch **gekennzeichnet**, daß der starre Siebrahmen (13) Aufhängevorrichtungen umfaßt, die ihn mit dem Gestell (12) der Vorrichtung verbinden, und die von oszillierenden Armen (26) gebildet werden, die in ihrer Mittelstellung im wesentlichen senkrecht auf der Ebene des Siebbandes (5) stehen.

10. Erntemaschine für empfindliche Produkte wie z.B. Wurzelpflanzen, Knollen oder Zwiebeln, dadurch **gekennzeichnet**, daß sie eine Vorrichtung zum Entfernen von Schmutz nach einem der Ansprüche 1 bis 9 umfaßt.

**Claims**

1. A soil separator for tender products, such as roots, tubers, bulbs, between the point extraction (20) and the point of storage or delivery (21), of the type comprising a perforated conveyor belt (1) which moves forward uniformly and is subjected to a screening movement substantially parallel to the direction in which the products move characterised in that the portion of the belt (5) subjected to the screening movement lies between two oscillating portions (6 and 7) of the belt bounded at one of their extremities by fixed guides (10, 11) in the form of pivots and at the other extremity by movable guides (8 and 9) for the said screening portion (5).

2. A soil separator according to claim 1, characterised in that it comprises two oscillating portions (6 and 7) : an upstream portion (6) which is orientated upwards, above the screening plane, and a downstream portion (7) orientated downwards beneath the screening plane, the two portions (6 and 7) substantially forming a dihedral about the pivots (10, 11).

3. A soil separator according to claim 2, characterised in that it comprises in an upstream part a portion (28) of continuously moving belt (1) which extends between the pivot (10) of the adjacent upstream oscillating portion (6) and a guide (23) in the form of a cylinder or roller provided at the point where the products are extracted (20) and in a second downstream part a portion (27) of the belt (1) which extends between the pivot (11) of the adjacent downstream oscillating portion (7) and an end guide (24) in the form of a cylinder or roller provided at the point where the product is delivered (21).

4. A soil separator according to claim 1, characterised in that it comprises two oscillating portions of the belt (6 and 7) orientated downwards, i.e. beneath the screening plane, each of the said portions (6 and 7) substantially forming a dihedral around the pivots (10 and 11).

5. A soil separator according to claim 4, characterised in that it comprises on the downstream side a portion of web (27) which extends between the pivot (11) of the adjacent oscillating portion (7) and an end guide (24) in the form of cylinder or roller placed at the point of delivery (21), the said guide (24) being a driving roller.

6. A soil separator according to any one of claims 1 to 5, characterised in that it comprises guides (8 and 9) for the portion of the screening belt (5) lying within the space separating planes perpendicular to the screening plane which pass through the axes of the guides (10 and 11).

7. A soil separator according to any one of claims 1 to 6, characterised in that it comprises a rigid frame (13) on which the guides (8 and 9) of the portion of the screening belt (5) are fixed, the said frame moving longitudinally, guided with respect to the body (12) of the soil separator and driven by a crank and connecting rod system (14, 15) attached to the said body (12).

8. A soil separator according to claim 7, characterised in that the crank and connecting rod system (14, 15) comprises means for adjusting the amplitude and frequency of movement of the frame (13) in such a way as to adjust the screening to the rate of forward movement of the conveyor belt (1) and the nature of the products being cleaned.

9. A soil separator according to claim 7, characterised in that the rigid screening frame (13) comprises suspension means connecting it to the body (12) of the soil separator consisting of oscillating arms (26) which are substantially perpendicular to the plane of the screening belt (5) in their median position.

10. A machine for lifting tender products such as roots, tubers or bulbs, characterised in that it comprises a soil separator according to any one of claims 1 to 9.

_fig.1_

_fig.2_

_fig.3_

_fig.4_